# EUROPEAN PATENT SPECIFICATION

(11) **EP 0 655 749 B1**
(45) Date of publication and mention of the grant of the patent: **26.01.2000**
(21) Application number: 95101495.0
(22) Date of filing: 08.05.1991
(51) Int. Cl.: H01B 1/12

(54) **Composite comprising paper and electroconducting polymers and its producing process**
Verbundstoff bestehend aus Papier und elektroleitfähigen Polymeren und Verfahren zur Herstellung desselben
Composite comportant du papier et des polymères électroconducteurs et son procédé de fabrication

(30) Priority: 10.05.1990 JP 11877890; 07.02.1991 JP 3657091
(43) Date of publication of application: 31.05.1995
(62) Divisional of application: 91107482.1
(73) Proprietor: TOMOEGAWA PAPER CO. LTD., Chuo-ku, Tokyo 104 (JP); YOSHINO, KATSUMI, Kishiwada-shi Osaka-fu 596 (JP)
(72) Inventor: Oka, Osamu, c/o Tomoegawa Paper Co., Ltd., Shizuoka-shi, Shizuoka (JP); Yoshino, Katsumi, Kishiwada-shi, Osaka (JP)
(74) Representative: Hansen, Bernd, Dr. Dipl.-Chem.

(56) References cited:
- FR-A- 2 072 068
- US-A- 3 708 289
- US-A- 4 528 118
- JOURNAL OF ELECTRONIC MATERIALS, vol. 13, no. 1, 1984 USA, pages 211-230, R. B. BJORKLUND ET AL. 'Some properties of polypyrrole-paper composites'
- PATENT ABSTRACTS OF JAPAN vol. 13 no. 226 (E-763) ,25 May 1989 & JP-A-01 036012 (ASAHI GLASS CO LTD) 7 February 1989,

## Description

### FIELD OF THE INVENTION

The present invention relates to a process for producing a composite comprising a paper and an electroconducting polymer having a grown conjugated system at the main chain thereof. More specifically, the invention relates to a process for producing a composite comprising a paper and a conjugated electroconducting polymer having improved fabrication and stability without impairing inherent characteristics of the conjugated electroconducting polymer and the composite comprising a paper and a conjugated electroconducting polymer being obtainable by said process.

### BACKGROUND OF THE INVENTION

An electroconducting polymer having a highly grown conjugated system at the main chain thereof causes insulatormetal transition by doping with a dopant which is an electron donor or an electron acceptor, whereby the conductivity thereof can be desirably controlled. Furthermore, with the transition, optical and magnetic properties of the compound are largely changed. Accordingly, such an electroconducting polymer has been widely noticed as a functional material capable of making various functional applications by utilizing the above-described properties.

Recently, with the development of various kinds of electroconducting polymers, utilization of the conjugated electroconducting polymer to electrodes for batteries, electrochemical sensors, electrochromic devices, etc., has been highly expected.

Since conventional conjugated electroconducting polymers are generally insoluble in almost all of solvents and are not melted even by heating, the polymers had a large disadvantage of poor fabrication. Recently, electroconducting polymers soluble in solvents and fusible electroconducting polymers capable of undergoing melt molding by heating have been developed. However, it is the present status that these conjugated electroconducting polymers have not yet had sufficient fabrication, or if these polymers are given sufficient fabrication, the inherent characteristics of these compounds are impaired.

Also, when a precursor polymer of a conjugated electroconducting polymer is cast and heat treated, a conjugated electroconducting polymer may be obtained in a film form. However, in almost all cases, it was impossible to obtain a film having sufficient flexibility. Bjorklund, R.B. and Lundström, I. reported about a process for impregnating a porous material, such as a paper (Journal of Electronic Materials, Vol.13, No. 1, 1984). The process for the impregnation comprises the soaking of the porous material in a solution of a metal salt like FeCl₃/H₂O which acts as the initiator for the polymerization. The material is subsequently contacted with the pyrrole monomer starting the oxidative polymerization.

### SUMMARY OF THE INVENTION

As a result of various investigations for solving the above-described problems, the present inventors have discovered a process of producing a composite composed of a paper and a conjugated electroconducting polymer having improved fabrication and stability without impairing inherent characteristics of the conjugated electroconducting polymer and the aforesaid composite itself.

That is, an object of the present invention is to provide a process of producing a composite comprising a paper and a conjugated electroconducting polymer having improved fabrication and stability without impairing inherent characteristics of the conjugated electroconducting polymer.

Thus, the present invention provides a process for producing a functional composite, which comprises impregnating a paper with a solution of a precursor polymer of a conjugated electroconducting polymer and heat treating the paper to form a conjugated electroconducting polymer between or on surfaces of fibers of the paper wherein the precursor polymer is selected from the group consisting of the compounds of formulae (I), (III) and (IV): 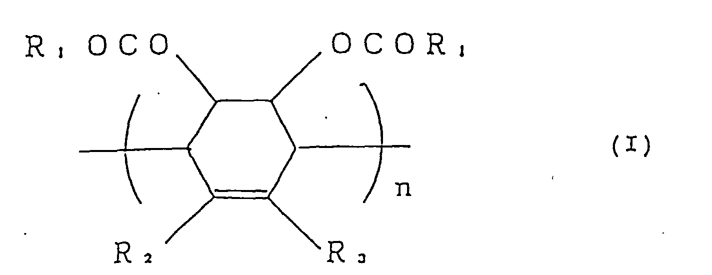 wherein R₁ represents a lower alkyl group or a lower alkoxy group, R₂ and R₃ each represents a hydrogen atom, an alkyl group, a substituted alkyl group, an alkoxy group, an aryl group, or a halogen atom, and n represents an integer of 8 or more; 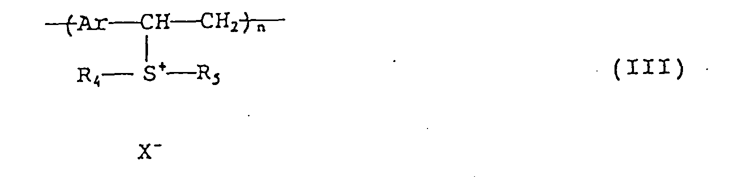 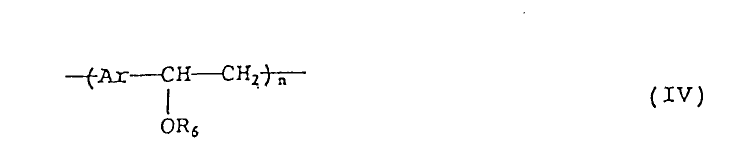 wherein R₄ and R₅, which may be the same or different, each represents an alkyl group, R₆ represents a lower alkyl group, X represents a halogen atom or a halogen compound, Ar represents a p-phenylene group, a 1,4-naphthylene group, a 2,5-thienylene group, or a 2,5-furylene group, each of which groups may have a substituent group, and n represents an integer of 8 or more and the composite being obtainable by the process itself.

### DETAILED DESCRIPTION OF THE INVENTION

As to the paper for use in this invention, there is no particular restriction if the paper can sufficiently endure under the circumstances of the polymerization of the conjugated compound, or the circumstances of being impregnated with a solution of the soluble precursor polymer and of the heat treatment, and using the composite. For example, uncoated papers for printing, original papers for thermal recording papers, original papers for copying papers, packaging papers, electrical insulating papers, and synthetic papers such as synthetic fiber papers and plastic foam papers can be used. Also, cloths, nonwoven fabrics, etc., can be used.

As the precursor polymer of conjugated electroconducting polymer for use in the present invention, for example, the following compounds can be used.
(1) Derivatives of poly(5,5-hydroxycyclohexene) represented by formula (I): 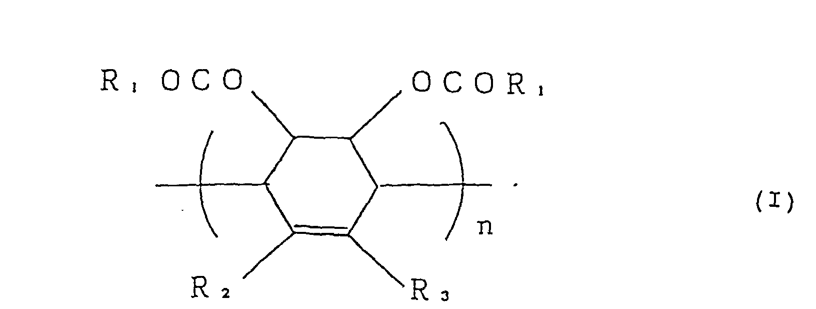 wherein R₁ represents a lower alkyl group or a lower alkoxy group; R₂ and R₃ each represents a hydrogen atom, an alkyl group, a substituted alkyl group, an alkoxy group, an aryl group, or a halogen atom; and n represents an integer of 8 or more.
   The compounds shown by formula (I) can be obtained by radical polymerization of a 5,6-dihydroxycyclohexa-1,3-diene derivative represented by formula (II): 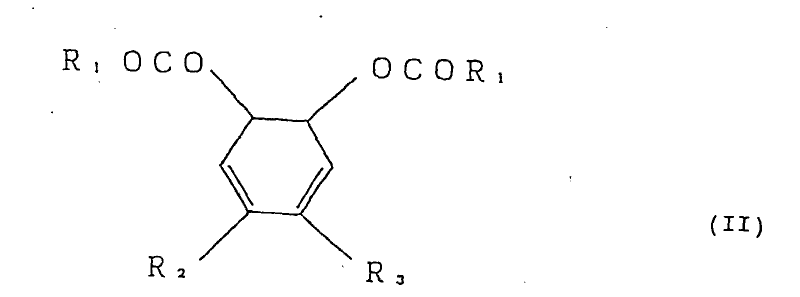 wherein R₁, R₂, and R₃ have the same meanings as described above.
(2) Compounds represented by formulae (III) and (IV): 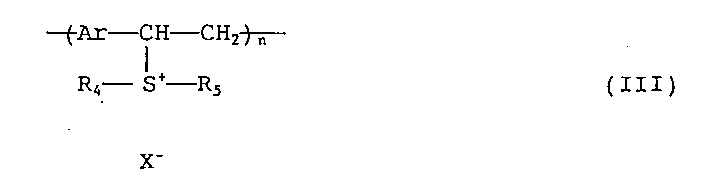 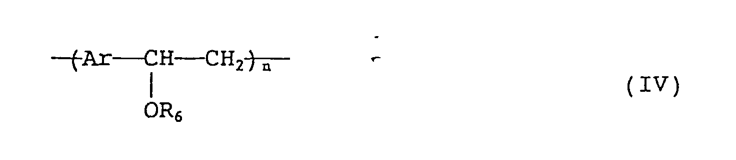 wherein R₄ and R₅, which may be the same or different, each represents an alkyl group; R₆ represents a lower alkyl group; X represents a halogen atom or a halogen compound (such as BF₄); Ar represents a p-phenylene group, a 1,4-naphthylene group, a 2,5-thienylene group, or a 2,5-furylene group, each of which groups may have a substituent group; and n represents an integer of 8 or more.

Examples of the substituent group for Ar of the compounds shown by formulae (III) and (IV) include an alkyl group (such as methyl, ethyl, propyl, butyl, pentyl, hexyl, heptyl, octyl, nonyl, decyl, dodecyl, docosyl), an alkoxy group (such as methoxy, ethoxy, propoxy), an alkenyl group, an amino group, an aryl group, a halogen atom, and a cyano group.

In addition, the sulfonium salt of the polymer shown by formula (III) can be obtained by adding, for example, an aqueous solution of a basic hydroxide to an aqueous solution of a compound represented by formula (V): 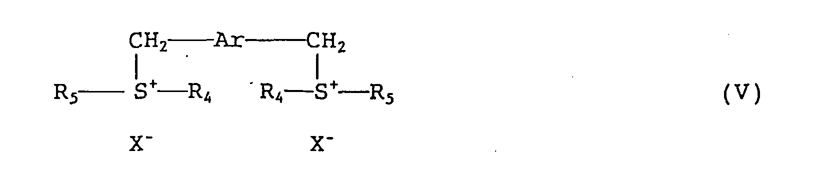 wherein R₄, R₅, Ar, and X have the same meanings as described above, and polymerizing the mixture.

Also, the polymer derivative which is substituted by an alkoxy group, as shown by formula (IV), can be obtained by solvolysis of the compound shown by formula (III) with an alcohol shown by R₆(OH), wherein R₆ has the same meaning as described above.

As a solvent for the precursor polymer shown by formulae (I), (III), or (IV), water, alcohol solvents (such as methanol, ethanol), ether solvents (such as tetrahydrofuran), amide solvents (such as N,N-dimethylformamide), other polar solvents, and mixtures thereof can be used.

For impregnating a paper with a solution of the precursor polymer, a method of impregnation by an immersion method using an immersion apparatus, a method of impregnation by an on-machine coating using a wet type paper making machine, or a method of coating by an off-machine using a coating apparatus may be used.

The heat treatment after impregnation is carried out in an inert gas such as a nitrogen gas or an argon gas, or under reduced pressure. Also, the heating temperature is preferably from 100°C to 500°C, and the heating time is usually from 10 minutes to 24 hours.

The conjugated electroconducting polymer formed by the above-described heat treatment is poly-p-phenylene and derivatives thereof from the precursor polymer shown by formula (I) and polyarlylenevinylenes and derivatives thereof from the precursor polymer shown by formula (III) or (IV), respectively.

The composite comprising a paper and a conjugated electroconducting polymer obtained by the process of this invention can be applied for use of wide ranges such as, for example, electrodes for primary and secondary batteries, packing papers having an antistatic function, electromagnetic shielding materials, etc., by properly selecting the form and shape of paper as a substrate. Furthermore, even a conventional conjugated electroconducting polymer which is obtained only as a powder or a conventional conjugated electroconducting high molecular weight compound which scarcely grows on an electrode can be used in the present invention while utilizing the characteristics thereof.

The following examples are intended to illustrate the present invention more practically but not to limit it in any way.

### EXAMPLE 1

By bulk polymerizing 2 g of a methylcarbonic acid ester of 5,6-dihydroxycyclohexa-1,3-diene (a compound of formula (II), wherein R₁ is a methoxy group, and R₂ and R₃ each is a hydrogen atom) for 3 hours at 50°C by using 2,2'-azobis(4-methoxy-2,4-dimethylvaleronitrile) as a radical polymerization initiator to provide a precursor polymer having n of about 700. The compound was dissolved in toluene, and a paper for printing having a thickness of 60 µm was immersed in the solution, sufficiently impregnated with a precursor polymer shown by formula (I), and then heat treated at 200°C for 3 hours under reduced pressure to provide a pale yellow functional composite.

The composite could be doped. When the composite was exposed to an iodine vapor, it changed to black, and the electric conductivity was 0.5 S/cm. Also, the tensile strength of the composite was 130 MPa, which was stronger than the paper. Furthermore, the composite could be electrochemically doped, and by doping the composite with AsF₆⁻ in a propylene carbonate solution of 0.1 M of LiAsF₆, the composite changed to blue.

Also, a battery was formed by combining with lithium and a propylene carbonate solution of 0.1 M of LiAsF₆. The voltage at the open end was 4.1 volts, and an energy density was 75 wh/kg.

### EXAMPLE 2

To an aqueous solution of 0.2 mole/liter of p-xylene-bis(dimethylsulfonium chloride) obtained from 1,4-bis-(chloromethyl)benzene and dimethyl sulfide was added an equivalent amount of an aqueous solution of sodium hydroxide, and after reaction for one hour at 0°C in a nitrogen gas stream, the reaction mixture was subjected to dialysis with respect to distilled water for 3 days by using a dialysis diaphragm having a differential molecular weight of 8000 to remove low-molecular weight portions, whereby an aqueous solution of poly[p-xylenebis(dimethylsulfonium chloride)] as a precursor polymer shown by formula (III) (wherein Ar is a p-phenylene group, R₄ and R₅ are each a methyl group, and X is Cl) was obtained. A paper for printing having a thickness of 60 µm was immersed in the aqueous solution, sufficiently impregnated with the precursor polymer, and then heat treated at 200°C for about 3 hours under reduced pressure to provide a pale yellow functional composite.

The composite obtained could be doped, and when the composite was exposed to an iodine vapor, it changed to black. The electric conductivity of the composite was 10⁻⁵ S/cm (measured by a 4-terminal method). Also, the tensile strength of the composite was 120 MPa, which was stronger than the paper. Furthermore, the composite could be electrochemically doped, and when the composite was doped with a perchloric acid ion in an acetonitrile solution of 0.1 M of tetra-n-butylammonium perchlorate, it changed to blue.

Also, a battery was formed by combining with lithium and a propylene carbonate solution of 0.1 M of lithium perchlorate. The voltage at the open end was 3.6 volts, and the energy density was 55 wh/kg.

### EXAMPLE 3

By following the same procedure as in Example 11 except that 1,4-bis(chloromethyl)-2,5-diethoxybenzene was used in place of the 1,4-bis(chloromethyl)benzene, to obtain an aqueous solution of poly[2,5-dimethoxy-p-xylenebis(dimethylsulfonium chloride)] as a precursor polymer shown by formula (III) (wherein Ar is a 2,5-dimethoxy-p-phenylene group, R₄ and R₅ are each a methyl group, and X is Cl) from which a red functional composite was then obtained. The composite became black by doping with iodine, and the electric conductivity of the composite was 1 S/cm. Also, the tensile strength of the composite was 110 MPa, which was stronger than the paper. Furthermore, the composite could be electrochemically doped, and by doping the composite with a perchloric acid ion in an acetonitrile solution of 0.1 M of tetra-n-butylammonium perchlorate, it changed to blue.

Also, a battery was formed by combining with lithium and a propylene carbonate solution of 0.1 M of lithium perchlorate. The voltage at the open end was 3.5 volts, and the energy density was 60 wh/kg.

### EXAMPLE 4

By following the same procedure as in Example 11 except that 1,4-bis(chloromethyl)-2,5-diethoxybenzene was used in place of the 1,4-bis(chloromethyl)benzene, to obtain an aqueous solution of poly[2,5-diethoxy-p-xylenebis(dimethylsulfonium chloride)] as a precursor polymer shown by formula (III) (wherein Ar is a 2,5-diethoxy-p-phenylene group, R₄ and R₅ are each a methyl group, and X is Cl) from which a red functional composite was then obtained. The composite became black by doping with iodine, and the electric conductivity was 3 S/cm. Also, the tensile strength of the composite was 110 MPa, which was stronger than the paper. Furthermore, the composite could be electrochemically doped, and by doping the composite with a perchloric acid ion in an acetonitrile solution of 0.1 M of tetra-n-butylammonium perchlorate, it changed to blue.

Also, a battery was formed by combining with lithium and a propylene carbonate solution of 0.1 M of lithium perchlorate. The voltage at the open end was 3.5 volts, and the energy density was 65 wh/kg.

### EXAMPLE 5

By following the same procedure as in Example 11 except that 2,5-bis(chloromethyl)thiophene was used in place of the 1,4-bis(chloromethyl)benzene and that a mixed solvent of water and methanol was used as the solvent, a red functional composite impregnated with a precursor polymer shown by formula (IV) (wherein Ar is a 2,5-thienylene group, and R₆ is a methyl group) was then obtained. The composite became black by doping with iodine, and the electric conductivity was 1.5 S/cm. Also, the tensile strength of the composite was 120 MPa, which was stronger than the paper. Furthermore, the composite could be electrochemically doped, and by doping the composite with a perchloric acid ion in an acetonitrile solution of 0.1 M of tetra-n-butylammonium perchlorate, it changed to blue.

Also, a battery was formed by combining with lithium and a propylene carbonate solution of 0.1 M of lithium perchlorate. The voltage at the open end was 3.0 volts, and the energy density was 50 wh/kg.

## Claims

1. A process for producing a functional composite, which comprises impregnating a paper with a solution of a precursor polymer of a conjugated electroconducting polymer and heat treating the paper to form a conjugated electroconducting polymer between or on the surface of fibers of the paper, wherein the precursor polymer is selected from the group consisting of the compounds of formulae (I), (III) and (IV): 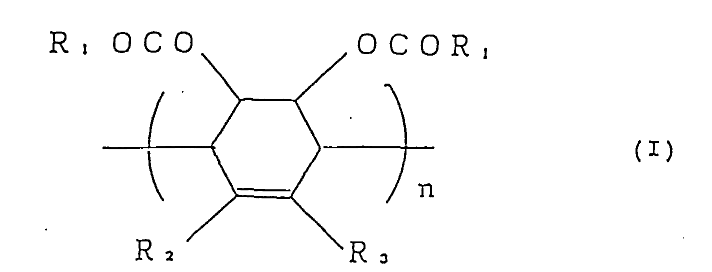 wherein R₁ represents a lower alkyl group or a lower alkoxy group, R₂ and R₃ each represents a hydrogen atom, an alkyl group, a substituted alkyl group, an alkoxy group, an aryl group, or a halogen atom, and n represents an integer of 8 or more; 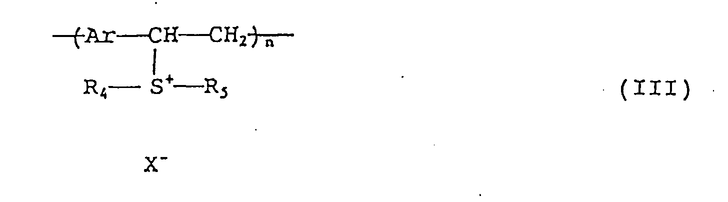 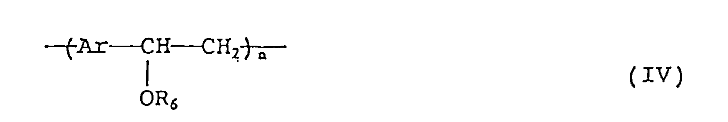 wherein R₄ and R₅, which may be the same or different, each represents an alkyl group, R₆ represents a lower alkyl group, X represents a halogen atom or a halogen compound, Ar represents a p-phenylene group, a 1,4-naphthylene group, a 2,5-thienylene group, or a 2,5-furylene group, each of which groups may have a substituent group, and n represents an integer of 8 or more.

2. A composite comprising a paper and a conjugated electroconducting polymer being obtainable by a process of claim 1.

## Patentansprüche

1. Verfahren zur Herstellung eines funktionalen Komposits, welches Stufen umfaßt, in denen ein Papier mit einer Lösung eines Vorstufen-Polymers eines konjugierten, den elektrischen Strom leitenden Polymers imprägniert und das Papier dann in der Hitze behandelt werden, um ein konjugiertes, den elektrischen Strom leitendes Polymer zwischen oder auf den Oberflächen der Papierfasern zu bilden, worin das Vorstufen-Polymer aus der Gruppe ausgewählt ist, bestehend aus Verbindungen der Formeln (I), (III) und (IV): 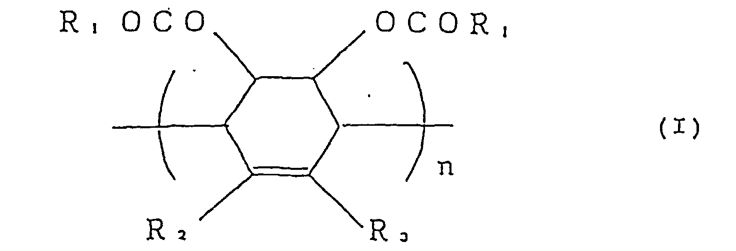 worin R₁ eine Niedrigalkyl- oder Niedrigalkoxygruppe, R₂ und R₃ jeweils ein Wasserstoffatom, eine Alkyl-, substituierte Alkyl-, Alkoxy-, Arylgruppe oder ein Halogenatom und n eine ganze Zahl von 8 oder mehr darstellen; 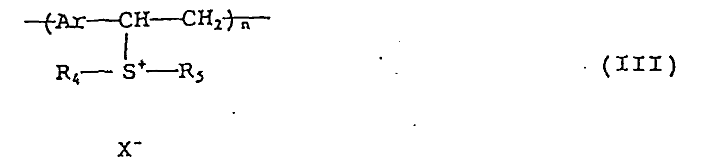 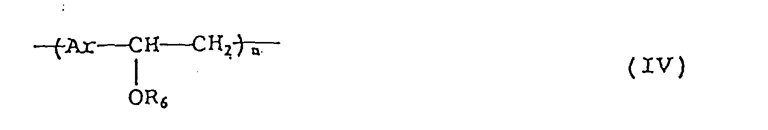 worin R₄ und R₅, gleich oder verschieden, jeweils eine Alkylgruppe, R₆ eine Niedrigalkylgruppe, X ein Halogenatom oder eine Halogenverbindung, Ar eine p-Phenylen-, 1,4-Naphthylen-, 2,5-Thienylen- oder eine 2,5-Furylengruppe, von denen eine jede Gruppe eine Substituentengruppe aufweisen kann, und n eine ganze Zahl von 8 oder mehr darstellen.

2. Komposit, umfassend ein Papier und ein konjugiertes, den elektrischen Strom leitendes Polymer, erhältlich mit einem Verfahren gemäß Anspruch 1.

## Revendications

1. Procédé pour la production d'un composite fonctionnel, comprenant l'imprégnation d'un papier par une solution d'un polymère précurseur d'un polymère électroconducteur conjugué et un traitement thermique du papier pour former un polymère électroconducteur conjugué entre les fibres du papier ou sur la surface des fibres, le polymère précurseur étant choisi dans le groupe constitué par les composés de formules (I), (III) et (IV) : 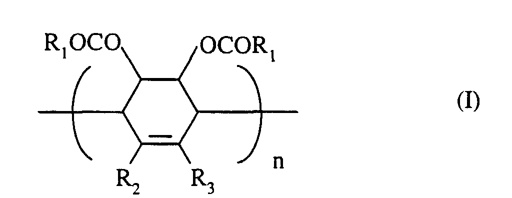 où R₁ représente un groupe alkyle inférieur ou un groupe alcoxy inférieur, R₂ et R₃ représentent chacun un atome d'hydrogène, un groupe alkyle, un groupe alkyle substitué, un groupe alcoxy, un groupe aryle ou un atome d'halogène et n représente un entier égal à 8 ou plus ; 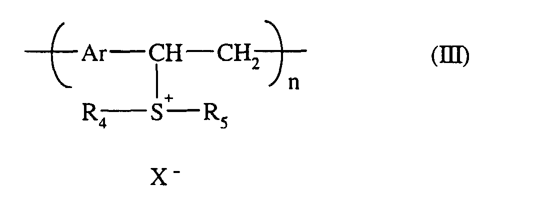 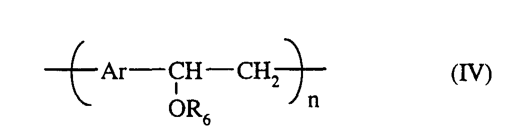 où R₄ et R₅, qui peuvent être identiques ou différents, représentent chacun un groupe alkyle, R₆ représente un groupe alkyle inférieur, X représente un atome d'halogène ou un composé halogéné, Ar représente un groupe p-phénylène, un groupe 1,4-naphtylène, un groupe 2,5-thiénylène ou un groupe 2,5-furylène, chacun de ces groupes pouvant porter un groupe substituant et n représente un entier égal à 8 ou plus.

2. Composite comprenant du papier et un polymère électroconducteur conjugué que l'on peut obtenir par un procédé selon la revendication 1.
